# EUROPÄISCHE PATENTSCHRIFT

(11) **EP 4 064 818 B1**
(45) Veröffentlichungstag und Bekanntmachung des Hinweises auf die Patenterteilung: **05.06.2024**
(21) Anmeldenummer: 20811576.6
(22) Anmeldetag: 20.11.2020
(51) Int. Cl.: A01B 79/00, A01M 7/00, A01B 69/00

(54) **VERFAHREN ZUM BEARBEITEN VON PFLANZEN AUF EINEM FELD**
METHOD FOR TREATING PLANTS IN A FIELD
PROCÉDÉ DE TRAITEMENT DE PLANTES DANS UN CHAMP

(30) Priorität: 25.11.2019 DE 102019218186
(43) Veröffentlichungstag der Anmeldung: 05.10.2022
(73) Patentinhaber: Robert Bosch GmbH, 70442 Stuttgart (DE)
(72) Erfinder: HOEFERLIN, Markus, 75397 Simmozheim (DE); GOHLKE, Maurice, 70178 Stuttgart (DE); AMEND, Sandra, 71636 Ludwigsburg (DE); DI MARCO, Daniel, 70469 Stuttgart (DE)
(86) Internationale Anmeldenummer: PCT/EP2020/082822
(87) Internationale Veröffentlichungsnummer: WO 2021/105014

(56) Entgegenhaltungen:
- WO-A1-2019/215582
- DE-A1-102017 217 258
- US-A1- 2019 114 481
- KNOLL FLORIAN J ET AL: "CPU architecture for a fast and energy-saving calculation of convolution neural networks", PROCEEDINGS OF SPIE; [PROCEEDINGS OF SPIE ISSN 0277-786X VOLUME 10524], SPIE, US, Bd. 10335, 26. Juni 2017 (2017-06-26), Seiten 103351M-103351M, XP060092216, DOI: 10.1117/12.2270282 ISBN: 978-1-5106-1533-5

## Beschreibung

### Technisches Gebiet

Die vorliegende Erfindung betrifft ein Verfahren zum Bearbeiten von Pflanzen auf einem Feld.

Von den vielfältigen Aufgaben in der Landwirtschaft nimmt die Beikrautregulierung für den Ertragserfolg eine zentrale Rolle ein. Die Kosten für Pestizide sind erheblich und ihre Auswirkungen auf die Umwelt problematisch. Es werden daher vermehrt autonom arbeitende Systeme zur Bearbeitung von Pflanzen, d.h. Nutzpflanzen und Beikräutern, verwendet. Die Bearbeitung kann dabei mechanisch, z.B. durch eine Fräse, aber auch durch eine gezielte Ausbringung von Pestiziden, z.B. durch einen gesteuerten Sprayer, erfolgen. Auf diese Weise kann der Einsatz von Pestiziden vermieden oder zumindest reduziert werden, wodurch der Einfluss auf die Umwelt sowie der Kostenaufwand reduziert werden.

Für die selektive (die zu bearbeitende Pflanze wird von anderen Pflanzen und dem Boden unterschieden) Pflanzenbearbeitung auf einem Feld ist es erforderlich, die Position einer zu bearbeitenden Pflanze auf einem Feld exakt zu erkennen. Dies kann durch unterschiedliche Objekterkennungsverfahren bewerkstelligt werden, wobei vor allem die optische Bilderkennung unter Verwendung eines Klassifizierers Einsatz findet. Dabei können eine semantische Segmentierung eines erfassten Bildes, aber auch eine Klassifikation des Bildes durchgeführt werden.

In der Praxis werden Fahrzeuge bzw. Vorrichtungen zum Bearbeiten von Pflanzen auf Feldern, auf denen eine bestimmte Nutzpflanzenart angebaut ist und eine Vielzahl von unterschiedlichen Beikräutern wachsen, eingesetzt.

Für die Klassifikation von Pflanzen auf einem Feld ist es dabei ein naheliegender Ansatz, einen Klassifizierer zu verwenden, der mindestens eine Unterscheidung zwischen der angebauten Nutzpflanze (z.B. Zuckerrübe) und den auf dem Feld wachsenden Beikräutern ermöglicht. Falls der Klassifizierer jedoch auf einem Feld, auf dem eine andere Nutzpflanzart (z.B. Mais) angebaut ist, verwendet werden soll, weist dieses Vorgehen den Nachteil auf, dass annotierte Trainingsdaten für dieses Feld zu Verfügung stehen müssen bzw. neu aufzunehmen sind. Anschließend muss der Klassifizierer neu trainiert werden (z.B. ist eine Zuckerrübe ist auf dem Maisfeld ein Beikraut) bzw. es muss ein weiterer Klassifizierer hinzugefügt werden, der mit den neuen Trainingsdaten trainiert wird. Dieses Vorgehen zum Klassifizieren wird als One-vs.-Other-Vorgehen bezeichnet, da eine besondere Nutzpflanzenart von einer Vielzahl von Beikräutern unterschieden wird.

Soll eine Vorrichtung auf unterschiedlichen Feldern eingesetzt werden, auf denen unterschiedliche Nutzpflanzen angebaut sind, ist es aus diesem Grund effizienter, die einzelnen Beikraut- und Nutzpflanzenarten als eine eigene Klasse zu definieren, so dass z.B. eine artenspezifische Klassifikation von Pflanzen möglich ist. Der Klassifizierer weist dabei eine Vielzahl von Klassen auf, so dass die Pflanzen auf einem Feld folglich artenspezifisch erkannt werden können. Dieses Vorgehen wird als All-vs.-All-Vorgehen bezeichnet. Bei diesem Vorgehen ist es folglich möglich, dass der Klassifizierer auf mehreren Feldern, auf denen unterschiedliche Nutzpflanzen angebaut sind, einsetzbar ist, da jeweils eine eigene Klasse pro Nutzpflanzenart definiert ist.

Es kann allerdings während eines Bearbeitungsvorgangs der Fall eintreten, dass unbekannte Pflanzen bzw. Pflanzen, die im Klassifizierer nicht definiert sind oder von ihm nicht erkannt werden, vorhanden sind, oder das ein Klassifikationsergebnis, das vom Klassifizierer ausgegeben wird, aufgrund variierender Umweltbedingungen (z.B. andere Bodenarten, unterschiedliches Saatgut mit anderer Genetik, nährstoffbedingte Wachstumsunterschiede, etc.) nicht ausreichend genau ist. Diese nicht in den Trainingsdaten vorhandenen Variationen bzw. unbekannten Pflanzen sollen jedoch mit möglichst wenig Aufwand direkt auf dem Feld nachtrainiert werden, so dass weiterhin eine genaue Unterscheidung zwischen den zu bearbeitenden Pflanzen und den nicht-zubearbeitenden Pflanzen möglich ist.

Es wäre dabei eine naheliegende Lösung, Bilder der unbekannten Pflanze zu erfassen, diese Bilder mit Groud-Truth zu annotieren, um neue Trainingsdaten zu generieren, und den Klassifizierer anschließend mit den neu generierten Trainingsdaten zu trainieren.

Dieses Vorgehen ist jedoch mit einem hohen Aufwand verbunden und lässt sich in der Praxis daher nicht effizient bewerkstelligen. Darüber hinaus ist es auf Feldern mit einem hohen Grad an Pflanzenbewuchs nahezu unmöglich, jede Pflanze exakt zu spezifizieren, um sie in den neuen Trainingsdaten zu annotieren.

Die WO 2019/215582 A1 offenbart ein Verfahren und System zur Unkrautbekämpfung.

In KNOLL FLORIAN J ET AL: "CPU architecture for a fast and energy-saving calculation of convolution neural networks", PROCEEDINGS OF SPIE; [PROCEEDINGS OF SPIE ISSN 0277-786X VOLUME 10524], SPIE, US, wird eine CPU Architektur für eine schnelle and energiesparsame Berechnung von Gefalteten Neuronalen Netzwerken beschrieben.

Die US 2019/114481 A1 offenbart ein Verfahren und ein System zur Erkennung von Mustermerkmalen.

Die DE 10 2017 217258 A1 offenbart ein Verfahren zum Klassifizieren von auf einem Feld wachsenden Pflanzen in Abhängigkeit von einem Grad der Ähnlichkeit.

Es ist daher Aufgabe der vorliegenden Erfindung, ein Verfahren zum Bearbeiten von Pflanzen auf einem Feld bereitzustellen, das auf einfache Weise auf dem Feld angepasst werden kann.

Kurzbeschreibung der Figuren
Fig. 1 zeigt ein Ablaufdiagramm des erfindungsgemäßen Verfahrens;
Fig. 2 zeigt ein neuronales Netz zum Bestimmen einer Position einer Pflanze auf einem Feld.

### Beschreibung der Ausführungsformen

Nachstehend werden Ausführungsformen der vorliegenden Erfindung unter Bezugnahme auf die beigefügten Figuren beschrieben.

Ein Fahrzeug, an dem eine Vorrichtung zum Bearbeiten der Pflanzen angebracht ist, fährt ein Feld entlang einer vorgegebenen Route ab und die zu bearbeitenden Objekte bzw. Pflanzen werden durch Ausführen des erfindungsgemäßen Verfahrens 100 nacheinander einzeln bearbeitet. Das Fahrzeug fährt das Feld dabei autonom ab, kann das Feld aber auch gemäß einer Steuerung durch einen Bediener abfahren.

Unter einem Feld kann eine abgegrenzte Bodenfläche für den Anbau von Nutzpflanzen oder auch ein Teil eines solchen Feldes verstanden werden. Unter einer Nutzpflanze wird eine landwirtschaftlich genutzte Pflanze verstanden, die selbst oder deren Frucht genutzt wird, z.B. als Nahrungsmittel, Futtermittel oder als Energiepflanze. Die Samen und folglich die Pflanzen werden vornehmlich in Reihen angeordnet, wobei zwischen den Reihen sowie zwischen den einzelnen Pflanzen innerhalb einer Reihe Objekte vorhanden sein können. Die Objekte sind jedoch unerwünscht, da sie den Ertrag der Pflanzen mindern oder einen störenden Einfluss während der Bewirtschaftung und/oder der Ernte darstellen. Unter einem Objekt kann jegliche Pflanze, die eine andere als die Nutzpflanze ist, oder jeglicher Gegenstand verstanden werden. Objekte können insbesondere Beikräuter, Hölzer und Steine sein.

Die Vorrichtung zum Bearbeiten von Pflanzen weist dazu mindestens die folgenden Elemente auf: ein Bearbeitungswerkzeug, ein Bilderfassungsmittel, verschiedene Sensorelemente (z.B. einen Positionssensor, einen Geschwindigkeitssensor, einen Neigungssensor, einen Abstandssensor usw.), eine Speichereinheit und eine Recheneinheit.

Die Vorrichtung zum Bearbeiten von Pflanzen ist auf einem dafür vorgesehenen Fahrzeug installiert, das durch eine Batterie betrieben wird, aber auch durch eine andere Energiequelle, wie etwa einen Verbrennungsmotor, betrieben werden kann. Die Vorrichtung kann darüber hinaus auch an einem landwirtschaftlichen Fahrzeug oder einem Anhänger für das landwirtschaftliche Fahrzeug angebracht sein. Die Vorrichtung wird dabei durch eine Energiequelle des Fahrzeugs betrieben, kann aber auch durch eine dafür vorgesehene separate Energiequelle betrieben werden.

Das Bearbeitungswerkzeug ist ein mechanisches Werkzeug, das an einer beweglichen Vorrichtung angebracht ist, so dass es zu einer zu bearbeitenden Pflanze hin- oder davon weggeführt werden kann und so ausgebildet ist, dass damit eine Pflanze bearbeitet wird. Die bewegliche Vorrichtung ist zum Beispiel ein Arm mit Gelenken, der durch Elektromotoren oder eine Hydraulik bewegt wird. Das Bearbeitungswerkzeug ist z.B. eine Fräse, die die Pflanze, d.h. in diesem Fall ein Beikraut, im Bereich der Wurzeln abtrennt. Das Bearbeitungswerkzeug kann aber auch ein Sprayer sein, mit dem ein Pestizid in Richtung einer zu bearbeitenden Pflanze gesprüht wird. Es ist anzumerken, dass der Sprayer auch zum Ausbringen eines Pflanzenschutzmittels oder von Dünger auf eine Nutzpflanze eingesetzt werden kann. Darüber hinaus sind noch weitere Bearbeitungswerkzeuge, wie etwa ein elektrisches Bearbeitungswerkzeug, ein Laser, Mikrowellen, heißes Wasser oder Öl, denkbar. Das am Fahrzeug installierte Bearbeitungswerkzeug weist dabei eine spezifische räumliche Genauigkeit auf. Die räumliche Genauigkeit bei einer Fräse hängt von der beweglichen Vorrichtung und der mechanischen Ausgestaltung (z.B. dem Durchmesser) der Fräse selbst ab. Die räumliche Genauigkeit bei einem Sprayer hängt von einem Düsenwinkel des Sprayers ab. Die räumliche Genauigkeit bei einem Sprayer ist dabei um ein vielfaches geringer als bei einer Fräse. Darüber hinaus ist es auch möglich, dass mehrere Bearbeitungswerkzeuge an einer Vorrichtung zum Bearbeiten von Pflanzen angebracht sind, die gleichzeitig betrieben werden können. Es können auch unterschiedliche Arten von Bearbeitungswerkzeugen an derselben Vorrichtung zum Bearbeiten von Pflanzen angebracht sein.

Das Bildererfassungsmittel ist eine Kamera, wie z.B. eine CCD-Kamera, eine CMOS-Kamera usw., die ein Bild im sichtbaren Bereich erfasst und als RGB-Werte oder als Werte in einem anderen Farbraum bereitstellt. Das Bilderfassungsmittel kann aber auch eine Kamera sein, die ein Bild im Infrarot-Bereich erfasst. Für das Erfassen von Pflanzen ist ein Bild im Infrarot-Bereich besonders geeignet, da eine Reflexion der Pflanzen in diesem Frequenzbereich deutlich erhöht ist. Das Bilderfassungsmittel kann aber auch z.B. eine Mono-, RGB-, Multispektral-, Hyperspektral-Kamera sein. Das Bilderfassungsmittel kann auch eine Tiefenmessung, z.B. durch eine Stereokamera, eine Time-of-Flight-Kamera usw., bereitstellen. Es ist möglich, dass mehrere Bilderfassungsmittel vorhanden sind, und dass die Bilder von den unterschiedlichen Bilderfassungsmitteln sowie die Daten von den verschiedenen Sensorelementen im Wesentlichen synchron erfasst werden.

Für den Betrieb der Vorrichtung zum Bearbeiten von Pflanzen sind weitere Daten erforderlich, die unter Verwendung von verschiedenen Sensorelementen erfasst werden. Die Sensorelemente können dabei einen Positionssensor, z.B. GPS, hochgenaues GPS usw., einen Geschwindigkeitssensor, einen Neigungssensor, einen Abstandssensor, aber auch andere Sensoren, wie etwa einen Wettersensor etc., umfassen.

Die Speichereinheit ist ein nichtflüchtiges gegenständliches Speichermedium, wie z.B. ein Halbleiterspeicher, in dem Daten längere Zeit gespeichert werden können. Die Daten bleiben in der Speichereinheit auch dann gespeichert, wenn keine Betriebsspannung an der Speichereinheit anliegt. Die Speichereinheit speichert ein Programm zum Ausführen des erfindungsgemäßen Verfahrens und dafür erforderliche Betriebsdaten. Zudem werden auf der Speichereinheit die vom Bilderfassungsmittel erfassten Bilder und die von den Sensorelementen erfassten Daten gespeichert. Es können aber auch andere Daten und Informationen in der Speichereinheit gespeichert werden.

Das in der Speichereinheit gespeicherte Programm enthält Anweisungen in Form von Programmcode, der in einer beliebigen Programmiersprache geschrieben ist, die der Reihe nach ausgeführt werden, so dass das erfindungsgemäße Verfahren 100 zum Bearbeiten der Pflanzen auf dem Feld ausgeführt wird. Das Programm kann dabei auch in mehrere Dateien aufgeteilt sein, die eine vorgegebene Beziehung zueinander aufweisen.

Die Recheneinheit ist eine arithmetisch-logische Einheit, die in Form eines Prozessors (z.B. CPU, GPU, TPU) implementiert ist. Die Recheneinheit ist imstande, Daten von der Speichereinheit zu lesen und Anweisungen entsprechend dem Programm auszugeben, um das Bilderfassungsmittel, die Sensorelemente und Aktoren, wie etwa das Bearbeitungswerkzeug, die allesamt mit der Recheneinheit kommunikativ (kabelgebunden oder kabellos) verbunden sind, zu steuern.

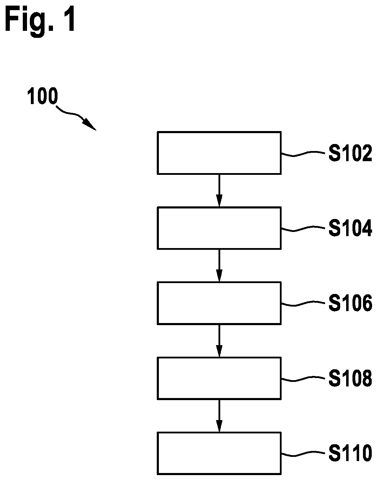

Während eines Abfahrens werden die einzelnen Verfahrensschritte S102 bis S110 des erfindungsgemäßen Verfahren 100, wie in Fig. 1 gezeigt, der Reihe nach ausgeführt. Die einzelnen Schritte werden nachfolgend im Detail beschrieben:
Eingangs wird in Schritt S102 das Bearbeitungswerkzeug ausgewählt, mit dem die Pflanzen bzw. Objekte auf einem Feld bearbeitet werden sollen. Die räumliche Genauigkeit, mit der die Pflanzen durch das Bearbeitungswerkzeug bearbeitet werden, hängt dabei, wie oben beschrieben, von der Art des Bearbeitungswerkzeuges ab. Das Bearbeitungswerkzeug kann vor einem Start des Abfahrens des Felds für die gesamte Dauer des Abfahrens festgelegt werden. Das Bearbeitungswerkzeug kann aber auch während eines Abfahrens gewechselt werden.

Anschließend wird in Schritt S104 ein Bild 12 von dem Feld, auf dem die Pflanzen wachsen, durch das Bilderfassungsmittel erfasst. Das Bilderfassungsmittel ist so an dem Fahrzeug angebracht, dass ein Bildsensor im Wesentlichen parallel zu einer Bodenoberfläche des Feldes ist. Zudem wird im Wesentlichen synchron zum Erfassen des Bilds 12 eine Positionsinformation über die Position erlangt, an der das Bild 12 auf dem Feld erfasst wird. Die vom Positionssensor erlangte Positionsinformation wird mit dem Bild 12 korreliert, so dass tatsächliche Positionen von Pixeln des Bilds 12 auf dem Feld unter Berücksichtigung der Positionsinformation, des Bildwinkels des verwendeten Bilderfassungsmittels und des Abstands des Bilderfassungsmittels vom Boden bestimmt werden können. Das Bilderfassungsmittel kann aber auch so angebracht sein, dass der Bildsensor in einer beliebigen Richtung geneigt ist, um einen größeren Bereich des Feldes zu erfassen. In diesem Fall ist der Neigungswinkel beim Bestimmen der Position eines Pixels auf dem Feld zu berücksichtigen.

Im nachfolgenden Schritt S106 wird das erfasste Bild 12 verarbeitet, um eine Position der zu bearbeitenden Pflanze auf dem Feld zu bestimmen. Dabei werden die Positionen der zu bearbeitenden Pflanzen einzeln dadurch bestimmt, dass den Pixeln des erfassten Bildes 12 eine Information über den dargestellten Inhalt zugewiesen wird. Da die Position der einzelnen Pixel auf dem Feld bekannt ist, können die jeweiligen Positionen der zu bearbeitenden Pflanzen bestimmt werden. Die Position einer Pflanze auf einem Feld wird dabei bevorzugt mittels einer semantischen Segmentierung des erfassten Bilds 12, das mit der Positionsinformation korreliert ist, bestimmt. Die semantische Segmentierung, bei der jeder Pixel eines Bildes 12 einzeln klassifiziert wird, wird durch Anwendung eines sog. Fully Convolutional DenseNet erhalten. Eine semantische Segmentierung kann aber auch durch ein Fully Convolutional Neural Network oder ein anderes geeignetes neuronales Netz erhalten werden. Verfahren für die pixelweise semantische Segmentierung von Bildern sind im Stand der Technik aus folgenden Dokumenten bekannt: Long, J., Shelhamer, E., & Darrell, T. (2015). "Fully convolutional networks for semantic segmentation". In Proceedings of the IEEE conference on computer vision and pattern recognition (pp. 3431-3440). Jégou, S., Drozdzal, M., Vazquez, D., Romero, A., & Bengio, Y. (2017). "The one hundred layers tiramisu: Fully convolutional densenets for semantic segmentation". In Proceedings of the IEEE Conference on Computer Vision and Pattern Recognition Workshops (pp. 11-19). Es ist darüber hinaus anzumerken, dass auch Bereiche, sog. Superpixel, im Bild 12 semantisch segmentiert werden können. Des Weiteren kann die Position der zu bearbeitenden Pflanze durch eine Klassifikation des Bildes 12 oder ein anderes bekanntes Verfahren zur Objekterkennung, bei dem ein neuronales Netz verwendet wird, bestimmt werden. Nachfolgend wird sowohl die semantische Segmentierung der Pixel bzw. Superpixel als auch die Klassifikation des Bildes vereinfacht als Klassifikation bezeichnet.

Eine jeweilige Position der zu bearbeitenden Pflanzen auf dem Feld wird, wie bereits erwähnt, unter Verwendung eines neuronalen Netzes 10 bestimmt.

Das Problem eine zu bearbeitende spezifische Pflanze (in den meisten Fällen die auf dem Feld wachsende Nutzpflanze) von anderen Pflanzen (meist Beikräuter) zu unterscheiden, kann durch das All-vs.-All-Vorgehen gehandhabt werden. Dieses Vorgehen bietet dabei den Vorteil, dass mehrere spezifische Klassen 14 bis 17 definiert werden. Zudem können unterschiedliche Klassen für Nutzpflanzen, z.B. 14 für Mais und 15 für Zuckerrübe definiert werden, wobei nur eine dieser Klassen entsprechend dem Feld, auf dem die Bearbeitung erfolgt, als Nutzpflanze festgelegt wird. Das neuronale Netz 10 ist somit flexibel auf Feldern mit unterschiedlichen Nutzpflanzen einsetzbar.

Darüber hinaus kann jede beliebige Klasse, z.B. 16, des neuronalen Netzes 10 als zu bearbeitende Pflanzenart festgelegt werden kann. Es können selbstverständlich auch mehrere Pflanzenklassen, z.B. 16 und 17, als zu bearbeitende Pflanzenart festgelegt werden. Beim Ausbringen von Dünger durch den Sprayer wird beispielsweise die Klasse der Nutzpflanze, z.B. 14 auf einem Maisfeld, als die zu bearbeitende Pflanze festgelegt. Falls ein für dikotyle Pflanzen wirksames Herbizid auszubringen ist, werden demgemäß nur dikotyle Beikräuter als die zu bearbeitenden Pflanzen festgelegt. Bei der mechanischen Bearbeitung durch die Fräse werden alle Pflanzen mit Ausnahme der Nutzpflanze als die zu bearbeitenden Pflanzen festgelegt.

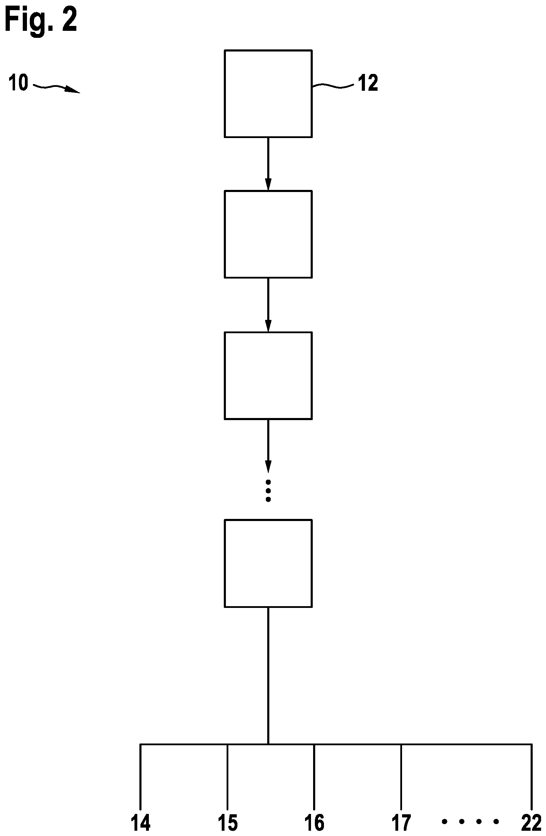

Wie bereits eingangs erläutert, kann bei Anwendung des All-vs.-All-Vorgehens jedoch der Fall eintreten, dass eine unbekannte Pflanze (meinst ein Beikraut, da die auf dem Feld wachsende Nutzpflanze bekannt sein sollte) durch das neuronale Netz 10 nicht klassifizierbar ist. Damit unbekannte Pflanzen bei Anwendung des All-vs.-All-Vorgehens trotzdem klassifiziert werden können, werden diese in einer allgemeinen Klasse 22 zusammengefasst, so dass eine Kombination mit dem One-vs.-Other-Vorgehen generiert wird. Das neuronale Netz 10 weist somit zusätzlich zu den spezifischen Klassen 14 bis 17 mindestens eine allgemeine Klasse 22, die meist eine höhere Hierarchieebene umfasst, auf. Die allgemeine Klasse 22 kann dabei die sehr allgemeine Klasse Beikräuter sein, ist aber nicht darauf begrenzt, und kann z.B. auch dikotyle oder monokotyle Pflanzen umfassen. Darüber hinaus können auch mehrere allgemeinere Klassen definiert werden (z.B. sowohl dikotyle als auch monokotyle Pflanzen). In Fig. 2 ist der allgemeinen Klasse exemplarisch das Bezugszeichen 22 zugewiesen. Es ist dazu anzumerken, dass die Klassen des neuronalen Netzes nicht auf diese Anzahl von Klassen begrenzt ist.

Im konkreten Fall, der in Fig. 2 gezeigt ist, wird die allgemeine Klasse 22 für Beikräuter, also alle Pflanzen, die nicht der Nutzpflanze entsprechen, definiert. Das erfindungsgemäße neuronale Netz 10 ist somit imstande, die Nutzpflanze nicht nur von den einzelnen Beikrautarten, für die eine eigene Klasse definiert ist, sondern auch von allen anderen Beikräutern, für die keine Klasse definiert ist und die nicht in der Ground Truth annotiert ist, mit der das neuronale Netz 10 initial trainiert wurde, zu unterscheiden. Das erfindungsgemäße neuronale Netz 10 bietet folglich den Vorteil, dass auch unbekannte Beikräuter klassifiziert und anschließend ggf. bearbeitet werden können. Ein Nachtrainieren des neuronalen Netzes 10 wird in einem späteren Abschnitt beschrieben.

Darüber hinaus wird das erfindungsgemäße neuronale Netz 10 als Multi-Label-Klassifizierer ausgestaltet, so dass Pflanzen zu mehr als einer Klasse gehören können. Eine Pflanze kann folglich sowohl zu einer der spezifischen Klassen 14 bis 17 als auch zu der allgemeinen Klasse 22 gehören. Diese Mehrfach-Klassifizierung (z.B. zu den Klassen 16 und 22) ist jedoch bei Verwendung des erfindungsgemäßen neuronalen Netzes 10 zu berücksichtigen und kann dadurch aufgelöst werden, dass eine Pflanze als zu der Klasse (z.B. zu Klasse 16) zugehörig klassifiziert wird, für die die maximale Konfidenz ermittelt wird.

Wird festgestellt, dass eine Bearbeitung der zu bearbeitenden Pflanzen auf dem Feld nur ungenügend ausgeführt wird, da viele Pflanzen auf dem Feld unbekannt sind oder eine starke Variation vorhanden ist, muss das neuronale Netz 10 an die geänderten Bedingungen angepasst werden. Da das erfindungsgemäße neuronale Netz 10 die allgemeine Klasse 22 aufweist, kann ein Nachtrainieren auf einfache Art und Weise erfolgen.

Dazu werden neue Trainingsdaten für das betreffende Feld generiert, indem Bilder in einem Bereich des Feldes erfasst werden, in dem keine Nutzpflanzen wachsen, so dass ausschließlich Beikräuter in den Bildern vorhanden sind. Es kann dazu ein Bereich am Rand des Feldes erfasst werden. Falls die einzelnen Reihen des Feldes bekannt sind, in denen die Nutzpflanzen angesät sind, können Bilder auch in einem Bereich zwischen den Reihen erfasst werden. Anschließend werden in diesen Bildern alle Pflanzen vom Boden segmentiert und als zu der allgemeinen Klasse 22 zugehörig annotiert. Liefert das neuronale Netz 10 ein zuverlässiges Klassifizierungsergebnis für die Nutzpflanze, können auch Bilder von einem Bereich aufgenommen werden, in dem Nutzpflanzen wachsen. In diesen Fall werden die erkannten Nutzpflanzen in den Bildern entsprechend annotiert und alle anderen Pflanzen werden automatisch als zu der allgemeinen Klasse 22 zugehörig annotiert. Mit diesen Daten kann, wie weiter unten beschrieben, ein Nachtrainieren des neuronalen Netzes 10 erfolgen.

Nachfolgend wird ein Verfahren zum Trainieren des erfindungsgemäßen neuronalen Netzes 10 beschrieben. Üblicherweise wird beim Training von neuronalen Netzen eine Kostenfunktion der Fehler minimiert, die bei der Klassifikation verursacht werden. Beim initialen Trainieren des erfindungsgemäßen neuronalen Netzes 10 wird die Kostenfunktion jedoch so angepasst, dass keine Kosten für den Fall generiert werden, dass eine Pflanze, die nicht der Nutzpflanze entspricht und für die eine spezielle Klasse (z.B. 16) definiert ist, als zu der allgemeinen Klasse 22 zugehörig klassifiziert wird. Zudem sind die Trainingsdaten, mit denen das neuronale Netz 10 initial trainiert wird, so angepasst, dass Beikräuter auch immer als zu der allgemeinen Klasse 22 zugehörig annotiert werden. Folglich weisen Beikräuter in den initialen Trainingsdaten mehrere Annotationen (d.h. Art des Beikrauts, z.B. 16, und allgemeine Klasse Beikraut 22) auf.

Falls das neuronale Netz 10 nun auf dem Feld nachtrainiert werden soll, sind die Trainingsdaten, wie oben beschrieben, lediglich als zu der allgemeinen Klasse 22 zugehörig annotiert. In diesem Fall wird die Kostenfunktion so angepasst, dass keine Fehlerkosten erzeugt werden, wenn eine Pflanze, die zu der allgemeinen Klasse 22 gehört, als zu einer der speziellen Klassen 15 bis 17 zugehörig klassifiziert wird. Das erfindungsgemäße neuronale Netz 10 bietet somit den Vorteil, dass ein Nachtrainieren mit neuen Trainingsdaten auf einfache Art und Weise erfolgen kann. Zudem kann eine Generierung von neuen Trainingsdaten ohne exakte und artenspezifische Annotation der unbekannten Pflanzen erfolgen, da sie als zu der allgemeinen Klasse 22 zugehörig annotiert sind. Demzufolge ist ein Nachtrainieren des neuronalen Netzes 10 auf dem Feld ohne großen Aufwand möglich.

Das erfindungsgemäße neuronale Netz 10 bietet somit den Vorteil, dass es schnell und effizient nachtrainiert werden kann, falls während einer Bearbeitung auf dem Feld eine unzureichend genaue Klassifizierung festgestellt wird. Zudem kann das erfindungsgemäße neuronale Netz 10 für die Klassifikation von Pflanzen auf Feldern mit unterschiedlichen Nutzpflanzen verwendet werden, da für diese jeweils eine eigene spezifische Klasse definiert ist.

Nachdem die Position der zu bearbeitenden Pflanze auf dem Feld in Schritt S106 unter Verwendung des erfindungsgemäßen neuronalen Netzes bestimmt ist, kann das ausgewählte Bearbeitungswerkzeug in Schritt S108 zur Position der Pflanze hingeführt werden und die entsprechende Bearbeitung kann für die einzelne Pflanze durchgeführt werden. Dabei kann ein mechanisches Werkzeug genau bis zur Position der Pflanze hingeführt werden oder der Sprayer kann zum Ausbringen des Pestizids, Pflanzenschutzmittels oder Düngers bis zu einem vorgegebenen Abstand an das Beikraut bzw. die Nutzpflanze herangeführt und auf diese gerichtet werden. Um eine exakte Steuerung der beweglichen Vorrichtung zu ermöglichen, ist es dabei ggf. erforderlich, die durch das Bild ermittelte Position der Pflanze in das Koordinatensystem der beweglichen Vorrichtung umzurechnen. Zudem ist eine Geschwindigkeit, mit der sich das Fahrzeug vorwärtsbewegt, beim Hinführen des Bearbeitungswerkzeuges zu berücksichtigen.

Anschließend wird die Pflanze in Schritt S110 mit dem Bearbeitungswerkzeug bearbeitet. Die Pflanze wird dabei durch die Anwendung des mechanischen Werkzeugs entfernt, gehäckselt oder zerstört oder mit dem Pestizid, Pflanzenschutzmittel oder Dünger besprüht. Durch die mechanische Bearbeitung der Pflanzen bzw. das gezielte Ausbringen von chemischen Substanzen kann folglich die bei konventionellen Verfahren ausgebrachte Menge an chemischen Substanzen deutlich verringert werden, so dass Kosten und der Einfluss auf die Umwelt verringert werden.

Das vorgesehene Einsatzgebiet des erfindungsgemäßen Verfahrens bezieht sich auf autonome Feldroboter bzw. intelligente Anbaugeräte für die Bodenbearbeitung und Pflanzenschutz im Gemüse-, Garten- und Ackerbau. Grundsätzlich können die oben beschriebenen neuronalen Netze auch in anderen Bereichen eingesetzt werden, in denen unbekannte Objekte vorhanden sein können, die jedoch durch einen Klassifizierer zu klassifizieren sind.

## Patentansprüche

1. Verfahren (100) zum Bearbeiten von Pflanzen auf einem Feld, auf dem eine bestimmte Nutzpflanze angebaut ist, mittels eines Bearbeitungswerkzeugs, mit den folgenden Schritten:
Erfassen (S104) eines Bilds von dem Feld, wobei das Bild (12) mit einer Positionsinformation korreliert wird;
Bestimmen (S106) einer Position einer zu bearbeitenden Pflanze auf dem Feld unter Verwendung eines neuronalen Netzes (10), in das das erfasste Bild (12) eingegeben wird, wobei das neuronale Netz (10) mehrere spezifische Klassen (14 bis 17) und eine allgemeine Klasse (22) aufweist, wobei die Nutzpflanze zu einer der spezifischen Klassen (z.B. 14) gehört und Pflanzen, die nicht der Nutzpflanze entsprechen, sowohl zu einer der speziellen Klassen (z.B. 16) als auch zur allgemeinen Klasse (22) gehören;
Hinführen (S108) des Bearbeitungswerkzeugs zur Position der Pflanze; und
Bearbeiten (S110) der Pflanze mit dem Bearbeitungswerkzeug.

2. Verfahren (100) gemäß Anspruch 1, wobei
Pflanzen, die nicht der Nutzpflanze entsprechen, in Trainingsdaten zum initialen Trainieren des neuronalen Netzes (10) sowohl mit der speziellen Klasse (z.B. 16) als auch mit der allgemeinen Klasse (22) annotiert werden.

3. Verfahren (100) gemäß Anspruch 2, wobei
eine Kostenfunktion bei einem initialen Trainieren mit den initialen Trainingsdaten so angepasst wird, dass keine Kosten für den Fall generiert werden, dass eine Pflanze, die nicht der Nutzpflanze entspricht und für die eine spezielle Klasse (z.B. 16) definiert ist, als zu der allgemeinen Klasse (22) zugehörig klassifiziert wird.

4. Verfahren (100) gemäß einem der vorhergehenden Ansprüche, wobei
Pflanzen, die nicht der Nutzpflanze entsprechen, in Trainingsdaten zum Nachtrainieren des neuronalen Netzes (10) mit der allgemeinen Klasse (22) annotiert werden.

5. Verfahren (100) gemäß Anspruch 4, wobei
die Trainingsdaten zum Nachtrainieren des neuronalen Netzes (10) in einem Bereich des Feldes erfasst werden, in dem keine Nutzpflanzen vorhanden sind.

6. Verfahren (100) gemäß Anspruch 4 oder 5, wobei
eine Kostenfunktion bei einem Nachtrainieren mit den Trainingsdaten zum Nachtrainieren so angepasst wird, dass keine Kosten für den Fall erzeugt werden, dass eine Pflanze, die zu der allgemeinen Klasse (22) gehört, als zu einer der speziellen Klassen (z.B. 16) zugehörig klassifiziert wird.

7. Verfahren (100) gemäß einem der vorhergehenden Ansprüche, wobei
die zu bearbeitenden Pflanzen Nutzpflanzen sind.

8. Verfahren (100) gemäß Anspruch 1, wobei
die zu bearbeitenden Pflanzen entweder Pflanzen aus einer speziellen Klasse (z.B. 16) oder Pflanzen aus mehreren speziellen Klassen (z.B. 16 und 17) oder Pflanzen aus der allgemeinen Klasse (22) sind.

9. Steuereinheit zum Ansteuern eines Bearbeitungswerkzeugs zum Bearbeiten von Pflanzen auf einem Feld, wobei die Steuereinheit eingerichtet ist, die folgenden Schritte durchzuführen:
Empfangen eines erfassten Bilds von dem Feld, wobei das Bild (12) mit einer Positionsinformation korreliert wird;
Bestimmen (S106) einer Position einer zu bearbeitenden Pflanze auf dem Feld unter Verwendung eines neuronalen Netzes (10), in das das erfasste Bild (12) eingegeben wird, wobei das neuronale Netz (10) mehrere spezifische Klassen (14 bis 17) und eine allgemeine Klasse (22) aufweist, wobei die Nutzpflanze zu einer der spezifischen Klassen (z.B. 14) gehört und Pflanzen, die nicht der Nutzpflanze entsprechen, sowohl zu einer der speziellen Klassen (z.B. 16) als auch zur allgemeinen Klasse (22) gehören;
Ausgeben eines Steuersignals zum Ansteuern des Bearbeitungswerkzeugs, um die Pflanze zu bearbeiten.

10. Landwirtschaftlichen Arbeitsmaschine mit einem Bearbeitungswerkzeug zum Bearbeiten von Pflanzen auf einem Feld, und einer Steuereinheit nach Anspruch 9.

## Claims

1. Method (100) for processing plants in a field in which a specific useful plant is grown by means of a processing tool, comprising the following steps:
capturing (S104) an image of the field, wherein the image (12) is correlated with position information;
determining (S106) a position of a plant to be processed in the field using a neural network (10), into which the captured image (12) is input, wherein the neural network (10) has a plurality of specific classes (14 to 17) and a general class (22), wherein the useful plant belongs to one of the specific classes (e.g. 14) and plants which do not correspond to the useful plant belong both to one of the specific classes (e.g. 16) and to the general class (22);
guiding (S108) the processing tool to the position of the plant; and
processing (S110) the plant using the processing tool.

2. Method (100) according to Claim 1, wherein
plants which do not correspond to the useful plant are annotated both with the specific class (e.g. 16) and with the general class (22) in training data for the initial training of the neural network (10).

3. Method (100) according to Claim 2, wherein
a cost function is adapted during initial training with the initial training data such that no costs are generated for the case where a plant which does not correspond to the useful plant and for which a specific class (e.g. 16) is defined is classified as being associated with the general class (22).

4. Method (100) according to any of the preceding claims, wherein
plants which do not correspond to the useful plant are annotated with the general class (22) in training data for the subsequent training of the neural network (10).

5. Method (100) according to Claim 4, wherein
the training data for the subsequent training of the neural network (10) are acquired in a region of the field in which no useful plants are present.

6. Method (100) according to Claim 4 or 5, wherein during subsequent training with the training data a cost function is adapted to the subsequent training such that no costs are generated for the case where a plant which belongs to the general class (22) is classified as being associated with one of the specific classes (e.g. 16).

7. Method (100) according to any of the preceding claims, wherein
the plants to be processed are useful plants.

8. Method (100) according to Claim 1, wherein
the plants to be processed are either plants from one specific class (e.g. 16) or plants from a plurality of specific classes (e.g. 16 and 17) or plants from the general class (22).

9. Control unit for controlling a processing tool for processing plants in a field, wherein the control unit is configured to carry out the following steps:
receiving a captured image of the field, wherein the image (12) is correlated with position information;
determining (S106) a position of a plant to be processed in the field using a neural network (10), into which the captured image (12) is input, wherein the neural network (10) has a plurality of specific classes (14 to 17) and a general class (22), wherein the useful plant belongs to one of the specific classes (e.g. 14) and plants which do not correspond to the useful plant belong both to one of the specific classes (e.g. 16) and to the general class (22);
outputting a control signal for controlling the processing tool in order to process the plant.

10. Agricultural work machine comprising a processing tool for processing plants in a field, and comprising a control unit according to Claim 9.

## Revendications

1. Procédé (100) de traitement de plantes dans un champ, dans lequel une plante utile spécifique est plantée, au moyen d'un outil de traitement, comprenant les étapes suivantes consistant à :
acquérir (S104) une image du champ, l'image (12) étant mise en corrélation avec une information de position ;
déterminer (S106) une position d'une plante à traiter dans le champ à l'aide d'un réseau neuronal (10) dans lequel l'image acquise (12) est introduite, le réseau neuronal (10) présentant de multiples classes spécifiques (14 à 17) et une classe générale (22), la plante utile appartenant à l'une des classes spécifiques (par exemple 14), et des plantes qui ne correspondent pas à la plante utile appartenant à la fois à l'une des classes spécifiques (par exemple 16) et à la classe générale (22) ;
guider (S108) l'outil de traitement jusqu'à la position de la plante ; et
traiter (S110) la plante à l'aide de l'outil de traitement.

2. Procédé (100) selon la revendication 1, dans lequel les plantes qui ne correspondent pas à la plante utile sont annotées dans des données d'apprentissage pour l'apprentissage initial du réseau neuronal (10) à la fois avec la classe spécifique (par exemple 16) et avec la classe générale (22).

3. Procédé (100) selon la revendication 2, dans lequel une fonction de coût est ajustée lors d'un apprentissage initial avec les données d'apprentissage initiales de telle sorte qu'aucun coût ne soit généré dans le cas où une plante ne correspondant pas à la plante utile et pour laquelle une classe spécifique (par exemple 16) est définie, est classée comme appartenant à la classe générale (22).

4. Procédé (100) selon l'une des revendications précédentes, dans lequel
les plantes qui ne correspondent pas à la plante utile sont annotées dans les données d'apprentissage pour le réentraînement du réseau neuronal (10) avec la classe générale (22).

5. Procédé (100) selon la revendication 4, dans lequel les données d'apprentissage destinées au réentraînement du réseau neuronal (10) sont acquises dans une zone du champ dans laquelle aucune plante utile n'est présente.

6. Procédé (100) selon la revendication 4 ou 5, dans lequel
une fonction de coût est ajustée lors d'un post-apprentissage avec les données d'apprentissage en vue d'un post-apprentissage de sorte qu'aucun coût ne soit généré dans le cas où une plante appartenant à la classe générale (22) est classée comme appartenant à l'une des classes spécifiques (par exemple 16).

7. Procédé (100) selon l'une des revendications précédentes,
les plantes à traiter sont des plantes utiles.

8. Procédé (100) selon la revendication 1, dans lequel les plantes à traiter sont soit des plantes appartenant à une classe spécifique (par exemple 16), soit des plantes appartenant à plusieurs classes spécifiques (par exemple 16 et 17), soit des plantes appartenant à la classe générale (22).

9. Unité de commande permettant de piloter un outil de traitement pour traiter des plantes dans un champ, l'unité de commande étant conçue pour exécuter les étapes suivantes consistant à :
recevoir une image acquise du champ, l'image (12) étant mise en corrélation avec une information de position ;
déterminer (S106) une position d'une plante à traiter dans le champ à l'aide d'un réseau neuronal (10) dans lequel l'image acquise (12) est introduite, le réseau neuronal (10) présentant de multiples classes spécifiques (14 à 17) et une classe générale (22), la plante utile appartenant à l'une des classes spécifiques (par exemple 14), et des plantes qui ne correspondent pas à la plante utile appartenant à la fois à l'une des classes spécifiques (par exemple 16) et à la classe générale (22) ;
sortir un signal de commande pour piloter l'outil de traitement pour traiter la plante.

10. Machine de travail agricole, comprenant un outil de traitement pour traiter des plantes dans un champ, et une unité de commande selon la revendication 9.
